# FASCICULE DE BREVET EUROPEEN

(11) **EP 2 964 946 B1**
(45) Date de publication et mention de la délivrance du brevet: **03.05.2017**
(21) Numéro de dépôt: 14718647.2
(22) Date de dépôt: 04.03.2014
(51) Int. Cl.: F02K 9/86, F02K 1/08, F02K 9/80

(54) **TUYERE A SECTION DE COL VARIABLE DE PROPULSEUR D'ENGIN AEROSPATIAL MUNIE D'UN POINTEAU MOBILE**
DÜSE MIT VARIABLEM HALSABSCHNITT FÜR EIN RAUMFAHRTSCHUBWERK MIT EINER MOBILEN NADEL
NOZZLE HAVING A VARIABLE NECK SECTION FOR A SPACECRAFT THRUSTER PROVIDED WITH A MOBILE NEEDLE

(30) Priorité: 07.03.2013 FR 1300516
(43) Date de publication de la demande: 13.01.2016
(73) Titulaire: HERAKLES, 33185 Le Haillan (FR)
(72) Inventeur: CLERMONT, Mathieu, F-33680 Saumos (FR); SORGEON, Sylvain, F-40230 St Vincent de Tyrosse (FR); LARRIEU, Jean-Michel, F-33460 Macau (FR)
(74) Mandataire: Desormiere, Pierre-Louis
(86) Numéro de dépôt international: PCT/FR2014/050479
(87) Numéro de publication internationale: WO 2014/135786

(56) Documents cités:
- FR-A1- 2 740 105
- US-A- 2 583 570
- US-A- 5 491 973

## Description

### Arrière-plan de l'invention

La présente invention se rapporte au domaine général des propulseurs destinés à délivrer une poussée pour le pilotage d'engins aérospatiaux tels que des missiles, des lanceurs ou encore des satellites, en utilisant le principe de propulsion par réaction ou par éjection de gaz. Elle vise plus précisément les tuyères à col fixe équipant des propulseurs à propergol solide.

Un propulseur à propergol solide est principalement constitué d'une enveloppe renfermant un bloc de poudre (propergol), d'un allumeur et d'une tuyère à divergent fixe. Le bloc de poudre est percé par un canal situé dans l'axe du propulseur qui sert de chambre de combustion. L'allumeur met le feu à la poudre à une extrémité de l'enveloppe et la combustion du propergol se propage de l'avant vers l'arrière du propulseur. La poudre brûle à une vitesse prédéfinie en produisant des gaz de combustion qui sont expulsés par la tuyère.

La section de col de la tuyère permet de réguler la combustion du bloc de poudre de manière à maintenir la pression souhaitée dans la chambre de combustion tout en produisant la poussée attendue. Aussi, dans le cas d'un propulseur délivrant une poussée à débit unique, la section de col de la tuyère est unique et prédéterminée en fonction du niveau de poussée souhaité.

Cependant, le recours à une section de col unique n'est pas adapté à un propulseur ayant deux régimes de fonctionnement (typiquement un fonctionnement à haut débit et un fonctionnement à bas débit).

Pour pallier un tel inconvénient, il est connu de munir la tuyère d'une section de col variable. En pratique, un pointeau mobile en translation est logé à l'intérieur de la tuyère. La position de ce pointeau dans l'écoulement des gaz de combustion permet de déterminer la section de passage des gaz qui sortent de la tuyère et ainsi d'ajuster la section d'éjection des gaz au régime de fonctionnement du propulseur. Des dispositifs permettant d'ajuster la section d'éjection des gaz dans un propulseur sont notamment divulgués dans les documents US 5 491 973, FR 2 740 105 et US 2 583 570.

Cependant, les tuyères à section de col variable connues de l'art antérieur ne permettent pas d'optimiser le coefficient de poussée à la fois lors d'une phase de fonctionnement à un niveau de pression élevé dans le propulseur (correspondant à un régime de fonctionnement à haut débit) et lors d'une phase de fonctionnement à un niveau de pression plus faible dans le propulseur (correspondant à un régime de fonctionnement à bas débit).

### Objet et résumé de l'invention

La présente invention a donc pour but principal de pallier de tels inconvénients en proposant d'adapter la section de col d'une tuyère de propulseur à un débit pouvant varier d'un haut débit à un bas débit.

Ce but est atteint grâce à une tuyère à section de col variable de propulseur d'engin aérospatial, comprenant un logement cylindrique présentant, au niveau d'une extrémité arrière, un col de diamètre d'ouverture inférieur au diamètre du logement, et un pointeau apte à coulisser à l'intérieur du logement entre une position avant de fonctionnement à haut débit dans laquelle un nez du pointeau est en retrait axial par rapport au col du logement et une position arrière de fonctionnement à bas débit dans laquelle le nez du pointeau est en butée axiale contre le col du logement, le pointeau comprenant une tige cylindrique destinée à coulisser à l'intérieur du logement de la tuyère, la tige se terminant, à une extrémité arrière, par le nez ayant un diamètre décroissant, le nez de la tige étant apte à venir en butée axiale contre le col du logement de la tuyère formant siège, tuyère dans laquelle, conformément à l'invention, le nez de la tige du pointeau comprend au moins deux rainures axiales ménagées à sa périphérie externe pour permettre le passage de gaz lorsque le nez est en butée axiale contre le col du logement de la tuyère

Le pointeau de la tuyère selon l'invention permet de définir deux modes de fonctionnement du col de la tuyère, à savoir un premier mode de fonctionnement à haut débit dans lequel le nez du pointeau est en retrait axial par rapport au col et un second mode de fonctionnement à bas débit dans lequel le nez du pointeau est en butée axiale contre le col. Dans le premier mode de fonctionnement, la section de passage des gaz de combustion qui sortent de la tuyère est maximale. Dans le second mode de fonctionnement, la section de passage des gaz de combustion est réduite aux seules rainures ménagées dans le nez du pointeau. Cette section de passage n'est cependant pas nulle et permet d'ajuster la section d'éjection des gaz à un régime de fonctionnement à bas débit du propulseur. De la sorte, un tel pointeau permet d'optimiser le coefficient de poussée à différentes phases de fonctionnement du propulseur correspondant à différents niveaux de pression dans celui-ci.

De plus, lorsqu'il est dans la position en butée axiale contre le col, un tel pointeau présente une bonne tenue à la chaleur des gaz de combustion. En effet, la surface d'échange thermique avec les gaz est relativement importante, ce qui favorise la dissipation de la chaleur et un échauffement moindre du pointeau conduisant à une très faible érosion.

Enfin, le pointeau de la tuyère selon l'invention permet de disposer d'une tuyère relativement insensible à l'échauffement des pièces qui la constitue quel que soit le mode de fonctionnement du propulseur. En effet, pour le mode de fonctionnement à haut débit, le col de la tuyère est classique, tandis que pour le mode de fonctionnement à bas débit, le plaquage du nez du pointeau sur le col conduit à un réglage de la section d'éjection des gaz qui est indépendant de la structure qui maintient le pointeau et le col.

Le nez de la tige du pointeau peut présenter une forme de cône. Alternativement, le nez peut se terminer par une partie en forme de cylindre ayant un diamètre inférieur à celui de la tige.

De préférence, les rainures du nez de la tige sont régulièrement espacées les unes des autres. De préférence également, le nez de la tige comprend trois rainures espacées de 120° les unes des autres.

L'invention a également pour objet un propulseur d'engin aérospatial comprenant une tuyère à section de col variable tel que définie précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique en coupe longitudinale d'un propulseur équipé d'une tuyère conforme à l'invention ;
- la figure 2 est une vue en perspective du pointeau de la tuyère de la figure 1 ;
- les figures 3A et 3B sont des vues du pointeau des figures 1 et 2 dans ses deux positions de fonctionnement ; et
- les figures 4A et 4B sont des vues d'un pointeau selon une variante de réalisation de l'invention dans ses deux positions de fonctionnement.

### Description détaillée de l'invention

L'invention s'applique à tout propulseur d'engin aérospatial (tel qu'un missile, un lanceur ou un satellite) fonctionnant sur le principe de propulsion par réaction ou par éjection de gaz.

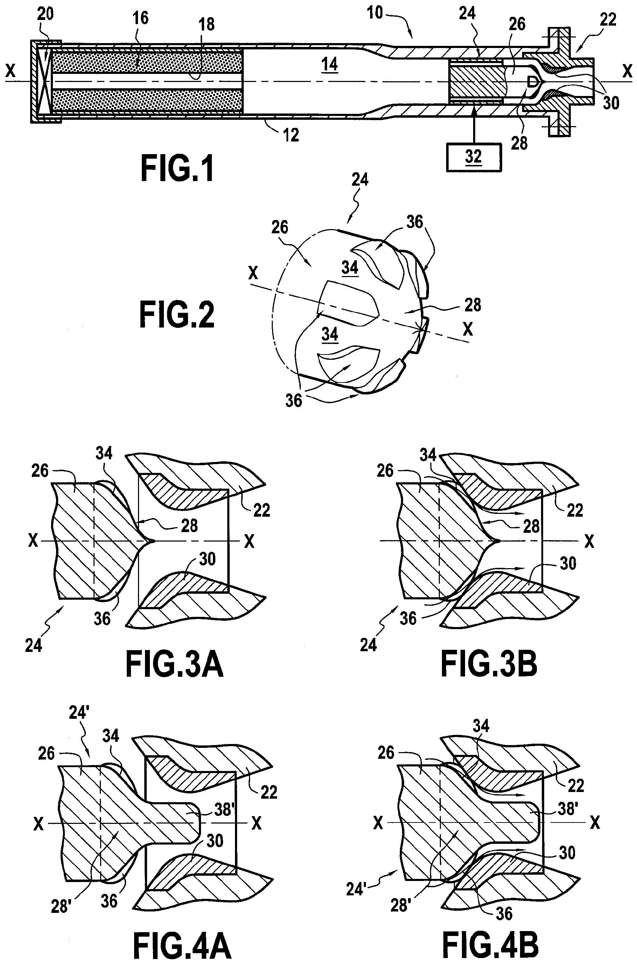

La figure 1 représente de façon très schématique un exemple non limitatif d'application de l'invention à un propulseur 10 à propergol solide. Bien entendu, l'invention s'applique également aux propulseurs utilisant un propergol sous d'autres formes (liquide, solide ou hybride).

De façon connue, le propulseur 10 représenté sur la figure 1 comprend principalement une enveloppe externe 12 de forme sensiblement cylindrique à l'intérieur de laquelle est ménagé un logement 14 également de forme cylindrique.

Au niveau d'une extrémité avant du propulseur, le logement 14 contient du propergol se présentant par exemple sous la forme d'un bloc de poudre 16 qui s'étend vers l'avant (selon un axe longitudinal X-X du propulseur).

Le bloc de poudre 16 est percé par un canal 18 situé dans l'axe longitudinal X-X du propulseur, ce canal servant de chambre de combustion. Un allumeur 20 monté à l'extrémité avant du logement 14 permet, sous commande, de mettre le feu à la poudre.

La combustion du propergol se propage de l'avant vers l'arrière dans le logement 14 du propulseur et les gaz de combustion sont évacués par une tuyère 22 à divergent fixe disposée à l'extrémité arrière du propulseur.

Le propulseur comprend également un pointeau 24 mobile à l'intérieur du logement 14. Ce pointeau comprend une tige cylindrique 26 de diamètre inférieur à celui du logement. Le pointeau est apte à coulisser axialement à l'intérieur du logement, sa position dans l'écoulement des gaz de combustion permettant de déterminer la section de passage des gaz qui sortent de la tuyère 22.

La tige 26 du pointeau peut être réalisée dans différents matériaux tels que notamment en matériau composite, et en particulier en matériau composite à matrice céramique ou en matériau composite réfractaire, ou en métal, et en particulier en tungstène.

Au niveau de son extrémité arrière, la tige 26 du pointeau se termine par une partie 28 ayant un diamètre décroissant formant un profil concave aérodynamique appelé « nez ». Ce nez est apte à venir en butée axiale contre un col géométrique 30 du logement délimitant l'ouverture de sortie des gaz de combustion. Le col 30, qui présente un diamètre d'ouverture inférieur au diamètre du logement, fait office de siège pour le nez 28 du pointeau.

Dans le mode de réalisation des figures 1, 2, 3A et 3B, le nez 28 du pointeau 24 présente une forme de cône.

Le déplacement du pointeau 24 à l'intérieur du logement 14 selon une direction parallèle à l'axe longitudinal X-X du propulseur est commandé au moyen d'un actionneur 32, par exemple électromécanique, pyrotechnique, pneumatique, ou encore pyrotechnique/pneumatique. Ce déplacement peut être réversible ou irréversible.

Sur commande de cet actionneur 32, le pointeau se déplace dans le logement du propulseur d'une position avant dite de fonctionnement à haut débit dans laquelle le nez 28 est en retrait axial par rapport au col 30 du logement (figures 1, 3A et 4A) à une position arrière dite de fonctionnement à bas débit dans laquelle le nez est en butée axiale contre le col du logement (figures 3B et 4B).

Conformément à l'invention, le nez 28 du pointeau comprend au moins deux rainures axiales 34 qui sont ménagées à sa périphérie externe (figure 2) pour permettre le passage de gaz lorsque le nez est en butée axiale contre le col 30 du logement.

Dans les exemples de réalisation représentés sur les figures 1, 2, 3A-3B et 4A-4B, les rainures 34 sont plus précisément délimitées chacune circonférentiellement entre deux languettes 36 en saillie par 2, 3A-3B et 4A-4B, les rainures 34 sont plus précisément délimitées rapport à la surface externe du nez. Ainsi, lorsque le pointeau est déplacé dans la position arrière de fonctionnement à bas débit, les languettes 36 en saillie viennent en butée axiale contre le col 30, permettant aux gaz de combustion d'être évacués en empruntant les rainures 34 pratiquées entre ces languettes.

De préférence, les rainures 34 du nez du pointeau sont régulièrement espacées les unes des autres (par rapport à l'axe longitudinal X-X du propulseur). Ces rainures sont au moins au nombre de deux et sont de préférence au nombre de trois avec un espacement circonférentiellement entre deux rainures adjacentes de 120°.

Par ailleurs, le nombre et la section de passage de chaque rainure sont prédéfinis de sorte à calibrer le débit de gaz évacué par la tuyère lorsque le pointeau est en position arrière de fonctionnement à bas débit.

Les figures 4A et 4B illustrent un autre mode de réalisation du pointeau 24' conforme à l'invention dans lequel le nez 28' du pointeau se termine par une partie 38' en forme de cylindre ayant un diamètre inférieur à celui du col 30. Les autres caractéristiques du pointeau restent identiques à celles du mode de réalisation précédemment décrit, et en particulier la présence sur le nez de rainures 34 formées entre des languettes 36 en saillie.

## Revendications

1. Tuyère à section de col variable (22) de propulseur d'engin aérospatial, comprenant :
un logement cylindrique (14) présentant, au niveau d'une extrémité arrière, un col (30) de diamètre d'ouverture inférieur au diamètre du logement, et
un pointeau (24 ; 24') apte à coulisser à l'intérieur du logement entre une position avant de fonctionnement à haut débit dans laquelle un nez (28 ; 28') du pointeau est en retrait axial par rapport au col du logement et une position arrière de fonctionnement à bas débit dans laquelle le nez du pointeau est en butée axiale contre le col du logement, le pointeau comprenant une tige (26) cylindrique destinée à coulisser à l'intérieur du logement de la tuyère, la tige se terminant, à une extrémité arrière, par le nez ayant un diamètre décroissant, le nez de la tige étant apte à venir en butée axiale contre le col du logement de la tuyère formant siège ;
**caractérisé en ce que** le nez de la tige du pointeau comprend au moins deux rainures (34) axiales ménagées à sa périphérie externe pour permettre le passage de gaz lorsque le nez est en butée axiale contre le col du logement de la tuyère.

2. Tuyère selon la revendication 1, dans lequel le nez (28) de la tige (26) du pointeau présente une forme de cône.

3. Tuyère selon la revendication 1, dans lequel le nez (28') de la tige (26) du pointeau se termine par une partie (38') en forme de cylindre ayant un diamètre inférieur à celui de la tige.

4. Tuyère selon l'une des revendications 1 à 3, dans lequel les rainures du nez de la tige du pointeau sont régulièrement espacées les unes des autres.

5. Tuyère selon la revendication 4, dans lequel le nez de la tige du pointeau comprend trois rainures espacées de 120° les unes des autres.

6. Propulseur (10) d'engin aérospatial comprenant une tuyère à section de col variable (22) selon l'une quelconque des revendications 1 à 6.

## Patentansprüche

1. Düse mit variablem Halsquerschnitt (22) eines Raumfahrtschubwerks, umfassend:
eine zylindrische Aufnahme (14), die im Bereich eines hinteren Endes einen Hals (30) mit einem kleineren Öffnungsdurchmesser als der Durchmesser der Aufnahme aufweist, und
eine Nadel (24; 24'), die geeignet ist, im Inneren der Aufnahme zwischen einer vorderen Betriebsposition mit hoher Durchgangsmenge, in der eine Nase (28; 28') der Nadel axial in Bezug zum Hals der Aufnahme zurückgesetzt ist, und einer hinteren Betriebsposition mit geringer Durchgangsmenge, in der die Nase der Nadel axial am Hals der Aufnahme am Anschlag ist, zu gleiten, wobei die Nadel eine zylindrische Stange (26) umfasst, die dazu bestimmt ist, im Inneren der Aufnahme der Düse zu gleiten, wobei die Stange an einem hinteren Ende mit der Nase mit einem abnehmenden Durchmesser endet, wobei die Nase der Stange geeignet ist, am Hals der Aufnahme der Düse, der einen Sitz bildet, zum Anschlag zu gelangen,
**dadurch gekennzeichnet, dass** die Nase der Stange der Nadel mindestens zwei axiale Nuten (34) umfasst, die an ihrer äußeren Peripherie ausgenommen sind, um den Gasdurchgang zu ermöglichen, wenn die Nase am Hals der Aufnahme der Düse am Anschlag ist.

2. Düse nach Anspruch 1, bei der die Nase (28) der Stange (26) der Nadel eine Kegelform aufweist.

3. Düse nach Anspruch 1, bei der die Nase (28') der Stange (26) der Nadel mit einem Teil (38') in Zylinderform mit einem kleineren Durchmesser als jeder der Stange endet.

4. Düse nach einem der Ansprüche 1 bis 3, bei der die Nuten der Nase der Stange der Nadel regelmäßig zueinander beabstandet sind.

5. Düse nach Anspruch 4, bei der die Nase der Stange der Nadel drei Nuten umfasst, die um 120° zueinander beabstandet sind.

6. Raumfahrtschubwerk (10), umfassend eine Düse mit variablem Halsquerschnitt (22) nach einem der Ansprüche 1 bis 6.

## Claims

1. A nozzle (22) of variable throat section for an aerospace vehicle thruster, the nozzle comprising:
· a cylindrical housing (14) presenting, at a rear end, a throat (30) of aperture diameter less than the diameter of the housing; and
· a needle (24; 24') suitable for sliding inside the housing between a high discharge rate front position in which the nose (28; 28') of the needle is axially set back from the throat of the housing, and a low discharge rate rear position in which the nose of the needle is axially in abutment against the neck of the housing, the needle comprising a cylindrical rod (26) for sliding inside the housing of the nozzle, the rod terminating at a rear end in a nose of decreasing diameter, the nose of the rod being suitable for coming axially into abutment against the seat-forming neck of the nozzle housing;
the nozzle being **characterized in that** the nose of the rod of the needle includes at least two axial grooves (34) formed in its outer periphery to allow gas to pass when the nose is axially in abutment against the neck of the housing of the nozzle.

2. A nozzle according to claim 1, wherein the nose (28) of the rod (26) of the needle presents a conical shape.

3. A nozzle according to claim 1, wherein the nose (28') of the rod (26) of the needle terminates in a portion (38') of cylindrical shape and of diameter smaller than the diameter of the rod.

4. A nozzle according to any one of claims 1 to 3, wherein the grooves in the nose of the rod of the needle are regularly spaced apart from one another.

5. A nozzle according to claim 4, wherein the nose of the rod of the nozzle has three grooves spaced apart at 120° from one another.

6. An aerospace vehicle thruster (10) including a nozzle (22) of variable section according to any one of claims 1 to 5.
